Europäisches Patentamt

European Patent Office

Office européen des brevets

(19)

(11) Veröffentlichungsnummer: **0 306 053 B1**

(12) **EUROPÄISCHE PATENTSCHRIFT**

(45) Veröffentlichungstag der Patentschrift: **04.12.91**

(51) Int. Cl.5: **C02F 3/22**, C02F 3/06

(21) Anmeldenummer: **88114409.1**

(22) Anmeldetag: **03.09.88**

(54) **Reaktor und Verfahren zum biologischen Reinigen von schadstoffhaltigem Wasser.**

(30) Priorität: **03.09.87 DE 3729399**
　　　　　**11.11.87 DE 3738295**

(43) Veröffentlichungstag der Anmeldung:
**08.03.89 Patentblatt 89/10**

(45) Bekanntmachung des Hinweises auf die
Patenterteilung:
**04.12.91 Patentblatt 91/49**

(84) Benannte Vertragsstaaten:
**AT BE CH DE ES FR GB GR IT LI LU NL SE**

(56) Entgegenhaltungen:
**EP-A- 10 571**
**EP-A- 130 499**
**EP-A- 227 081**
**US-A- 4 411 780**

(73) Patentinhaber: **TECON GMBH**
**Am Kunstgraben 8**
**W-3392 Clausthal-Zellerfeld(DE)**

(72) Erfinder: **Die Erfinder haben auf ihre Nennung verzichtet**

(74) Vertreter: **Fitzner, Ulrich, Dr.**
**Am Eichförstchen 2a**
**W-4030 Ratingen 4(DE)**

**Beschreibung**

Gegenstand der Erfindung ist ein Reaktor zum biologischen Reinigen von schadstoffhaltigem Wasser in einem geschlossenen Gefäß mittels Schlaufenbetriebs sowie ein Verfahren zur Durchführung der Wasserreinigung.

Für die Entfernung von Schadstoffen aus Abwässern ist eine Vielzahl von biologischen Verfahren bekannt, die in der einschlägigen Literatur ausführlich beschrieben sind (vgl. z.B. Rehm H.J.: Industrielle Mikrobiologie, 2. Aufl., Berlin-Heidelberg-New York 1981; Präve B.: Handbuch der Biotechnologie, Wiesbaden 1982; Einsele A.: Mikrobiologische und biochemische Verfahrenstechnik, Weinheim 1985; Fritsche W.: Umwelt-Mikrobiologie, Berlin 1985). Vielfach werden solche Verfahren in flachen Belebungsbecken und in davon getrennten Sedimentationsbecken durchgeführt. Die Nachteile solcher Verfahren liegen insbesondere in der Geruchsbelästigung, der Lärmbelästigung, dem großen Platzbedarf sowie den hohen Investitions- und Betriebskosten.

Weiterhin ist bekannt, Abwasser in hohen zylindrischen Türmen oder Blasensäulen zu reinigen. Der Raumbedarf für diese Anlagen ist aber verhältnismäßig grob. Andererseits erfordert die Hochbauweise große Investitions- und Betriebskosten.

In der DE-A 31 08 629 wird eine Abwasseraufbereitungsanlage beschrieben, bei der in einem vertikalen zylindrischen Außenrohr mit einem inneren Strömungsleitrohr das Abwasser mittels einer Pumpe umgewälzt wird. Dabei wird das abgepumpte Abwasser dem inneren Strömungsleitrohr, welches das Flüssigkeitsniveau der Aufwärtsstromkammer überragt, von oben zugeführt. Außerdem wird über ein Gebläse in das Strömungsleitrohr sauerstoffhaltiges Gas eingespeist. Um die Lösungsfähigkeit des Abwassers für Sauerstoff zu erhöhen, sollen die beiden, die Umwälzkammern bildenden Außen- und Innenrohre bis zu einer Tiefe von 100 m führen. Hieraus ist ersichtlich, welche Dimensionen eine solche Anlage aufweist. Weil es sich um eine offene Anlage handelt, sind Geruchsbelästigungen nicht auszuschließen.

Die EP-A-0003547 betrifft einen geschlossenen Reaktor zur biologischen Abwasserreinigung, der ein inneres Strömungsrohr aufweist, in das mittels einer Düse Abwasser und Luft eingebracht werden. Aus der FR-A-2326384 ist ferner bekannt, mittels einer Triebstrahldüse Abwasser zu belüften und in ein offenes Becken einzutragen. In der DE-A-1557018 wird ebenfalls geschildert, Triebstrahldüsen in Reaktoren zum Vermischen von Gasen und Flüssigkeiten zu verwenden. In der EP-A-0130499 ist ein Gerät zur biologischen Abwasserreinigung dargestellt. Es handelt sich hierbei um ein geschlossenes Reaktorgefäß, welches vertikal und konzentrisch zu seinem äußeren Mantel angeordnet ein inneres Strömungsleitrohr enthält. Dem Strömungsleitrohr wird das Abwasser und ein sauerstoffhaltiges Gas über eine Zweistoffdüse zugeführt. Sofern es sich um besonders hoch belastete Abwasser handelt und die Reinigung demzufolge nicht ausreichend ist, wird das Abwasser noch einen zweiten Reaktor zugeführt und dort in einer zweiten Stufe behandelt. Bei einer solchen Doppelanlage kann außerdem das sich oben im Reaktorgehäuse ansammelnde Gas wieder dem Abwasser zugemischt werden.

Aus der US-Patentschrift 4 411 780 ist schließlich eine Anlage bekannt, bei welcher eine Zufuhrleitung für das Abwasser mittig in einem rohrförmigen Reaktor angeordnet ist. Die Öffnung der Zufuhrleitung befindet sich unmittelbar über dem Boden des stehenden Reaktorteils. Zwischen dem Rohr und der Reaktorinnenwand entsteht somit ein Ringraum, in welchem das zugeführte Abwasser aufsteigen kann. In diesem Ringraum steigt das Abwasser auf und wird mit Hilfe der dort vorhandenen Einbauten gereinigt.

Die europäische Patentanmeldung 0 010 571 betrifft eine spezielle Kombination eines Schlaufen- und eines Rohrreaktors. Für den Teil des Reaktors, welcher die Schlaufe enthält, werden verschiedene Konstruktionsbeispiele vorgestellt. In einigen Fällen wird ein beiderseits offenes Leitrohr vorgeschlagen, in welchem ein beiderseits offenes Einsteckrohr angeordnet ist. Eine spezielle Anordnung, etwa in der Weise, daß das Leitrohr oben und unten über das Ende des Einsteckrohrs hinausragen muß, wird jedoch nicht vorgestellt. In den entsprechenden Beispielen ist die Düse sowohl unterhalb des Einsteck- als auch unterhalb des Leitrohrs angeordnet. Unterhalb des Einsteck- und Leitrohrs befinden sich auch keine Einbauten, mittels derer die Strömungsrichtung verändert werden soll. Ebenso fehlt in den Reaktoren ein Sedimentationsbecken.

Die Verwendung der genannten Schlaufenreaktoren hat zwar erhebliche Vorteile. Aber zur Aufrechterhaltung der Schlaufenströmung bedarf es eines großen Leistungseintrags, so daß der spezifische Energiebedarf solcher Verfahren relativ hoch ist. Ein weiterer Nachteil dieser Verfahren ist, daß ein Teil der mit dem gereinigten Wasser aus dem Belebungsraum mitgeführten Biomasse in den Belebungsraum zurückgeführt werden muß, um ein Auswaschen der Biomasse aus dem Belebungsraum zu vermeiden. Daher sind Einrichtungen zur Abtrennung der Biomasse von dem gereinigten Abwasser erforderlich.

Aufgabe der vorliegenden Erfindung ist es daher, einen Reaktor zur Reinigung von schadstoffhaltigem Wasser zu schaffen, bei dem Belebungsraum und Sedimentationsraum in einem Gerät zusammengefaßt sind und infolgedessen die oben angeführten Nachteile der mehrstufigen Anlagen vermieden werden.

Die Aufgabe wird durch einen als geschlossenes Gefäß ausgebildeten Reaktor gelöst, in dem

a) vertikal und konzentrisch zu seinem Mantel und zueinander

- ein Einsteckrohr (7), in das zwecks Zuleitung des zu reinigenden Biomasse-Wasser-Gas-Gemischs eine Düse (6) vom oberen Ende her hineinragt, und
- ein Leitrohr (11), das mit dem innenliegenden Einsteckrohr (7) einen inneren Ringraum (27) und mit dem Reaktormantel einen äußeren Ringraum (23) bildet,

b) mindestens ein konisch ausgebildeter Sedimentationsraum (15) sowie ein Absaugrohr (20) im unteren Teil angeordnet ist,

c) das Einsteck- (7) und Leitrohr (11) beiderseits offen sind,

d) das Leitrohr (11) oben und unten über die Enden des Einsteckrohrs (7) hinausragt, und

e) eine Prallplatte (10) zur Umlenkung des aus dem unteren Ende strömenden Biomasse-Wasser-Gas-Gemischs unterhalb des Einsteckrohrs (7) und oberhalb des Absaugrohrs (20), aber innerhalb des Leitrohrs (11) so angeordnet ist, daß ein Teil des Biomasse-Wasser-Gas-Gemischs durch den inneren Ringraum nach oben strömt, während ein anderer Teil entweder über das Absaugrohr (20) nach unten abfließt oder in den äußeren Ringraum (23) gelangt.

Der Sedimentationsraum kann mit Räumeinrichtungen zur Entfernung der Biomasse ausgestattet sein. Hierfür kommen beispielsweise Saugräumer in Betracht. Als Düse kann eine Zweistoffdüse verwendet werden, durch deren Düsenaustrittsquerschnitt ein mit Sauerstoff versorgtes Einsteckrohr geführt ist. Eine solche Düse ist beispielsweise in der europäischen Patentschrift 0130499 beschrieben. Der innere und der äußere Ringraum können mit Einbauten zwecks Immobilisierung von Mikroorganismen versehen sein. Als Trägermaterial für die Mikroorganismen können auch Füllkörper verwendet werden.

Aufgabe der Erfindung ist es ferner, ein Verfahren zur Abwasserreinigung zur Verfügung zu stellen, das mit Hilfe des erfindungsgemäßen Reaktors durchgeführt werden kann.

Diese Aufgabe wird dadurch gelöst, daß

a) in das Einsteckrohr des Reaktors mittels einer Zweistoffdüse ein Biomasse-Wasser-Gas-Gemisch eingetragen und

b) an der Prallplatte (10) zum inneren Ringraum (22) umgelenkt, so daß ein Teil des Gemischs nach oben strömt, während der andere Teil über ein Ansaugrohr (20) nach unten abfließt oder in den äußeren Ringraum (23) gelangt, wobei die Biomasse sich in den Sedimentationsraum (15) absetzt,

c) das am oberen Ende des inneren Ringraums austretende Gemisch durch die Triebstrahlwirkung der Zweistoffdüse mit dem frisch zufließenden Wasser-Gas-Biomasse-Gemisch vermischt und in das Einsteckrohr eingetragen,

d) das im äußeren Ringraum aufwärts strömende Wasser einer Nachreaktion unterworfen und

e) aus dem Reaktor über ein Abflußrohr als gereinigtes Wasser abgeführt wird.

Das Prinzip des erfindungsgemäßen Verfahrens beruht darauf, daß Wasser durch Begasen eines Biomasse-Wasser-Gemischs in einen Reaktor eingetragen wird. Auf diese Weise werden dem Belebungsraum kontinuierlich Wasser und Gas zugeführt. Gleichzeitig wird aus dem Sedimentationsraum kontinuierlich ein Biomasse-Wasser-Gemisch abgezogen und in den Belebungsraum zurückgeführt. Zugleich werden das gereinigte Wasser und die überschüssige Biomasse kontinuierlich entnommen.

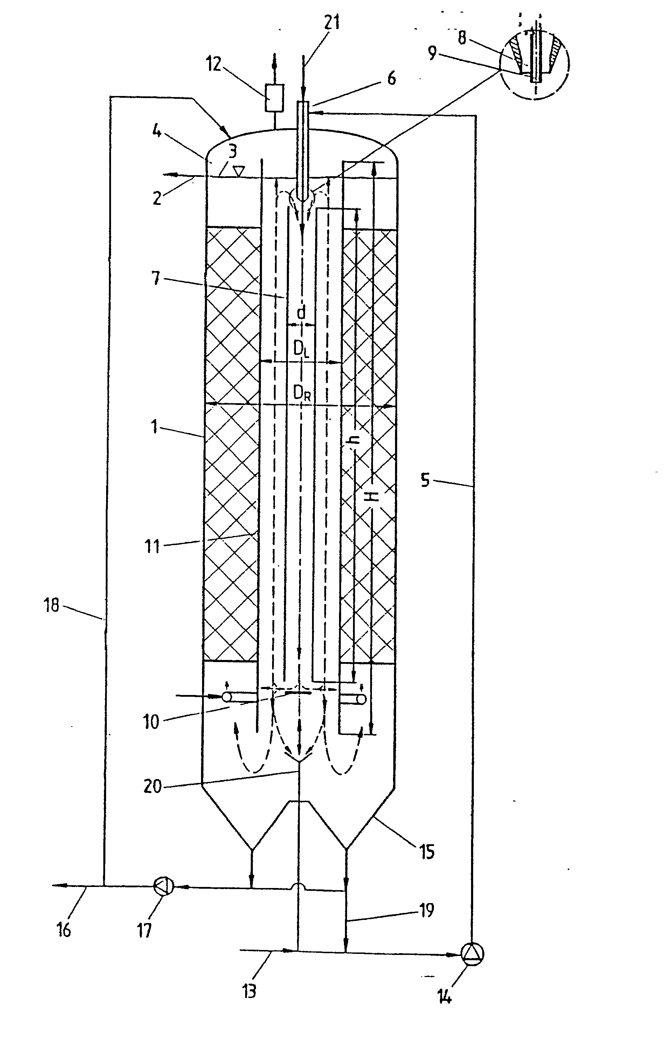

Nachfolgend wird die Erfindung anhand der Figur, die einen schematischen Aufbau einer Anlage zum Durchführen des erfindungsgemäßen Verfahrens in beispielhafter Ausführung zeigt, näher erläutert.

Das zu reinigende Wasser wird über die Leitung 13 gemeinsam mit dem zurückgeführten Biomasse-Wasser-Gemisch über die Pumpe 14 und die Rückführleitung 5 von oben mittels einer Zweistoffdüse 6 konzentrisch in das Einsteckrohr 7 eingeleitet. Dabei wird zusätzlich Gas über das Ansaugrohr 9, das mittig in dem Düsenaustrittsquerschnitt 8 angeordnet ist, aus einem gashaltigen Raum 21 angesaugt oder unter Druck zugeführt. Durch die Förderwirkung des Treibstrahls der Zweistoffdüse bewegt sich das Gas-Biomasse-Wasser-Gemisch in dem Einstechrohr nach unten und wird an der Prallplatte 10 zum Leitrohr 11 hin in den inneren Ringraum 22 umgelenkt, so daß ein Teil des Gemischs in diesem Ringraum zwischen Einstechrohr und Leitrohr nach oben strömt. Dort wird ein Teil des mitgeführten Gases über den Filter 12 abgeführt. Der Rest des Gemischs strömt nach unten ab und wird über das Ansaugrohr 20 der Zweistoffdüse zugeführt. Ein anderer Teil des Wassers strömt in dem äußeren Ringraum 23 nach oben und verläßt über das Abflußrohr 2 als gereinigtes Wasser des Reaktor. In dem äußeren Ringraum findet eine Nachbehandlung des Wassers statt, vorzugsweise eine Nitrifizierung. Die Nachbehandlung kann mit Hilfe trägergebundener Mikroorganismen durchgeführt werden. Als Träger kommen feste Einbauten oder Füllkörper in Betracht. Die im unteren, konisch ausgeführten Teil 15 des Reaktors sich absetzende Biomasse wird mittels der Pumpe 17 über das Entnahmerohr 16 dem Reaktor entnommen. Die Biomasse kann auch über die Leitung 18 in den Reaktor rückgeführt werden. Eine andere Möglichkeit besteht darin, daß die Biomasse über die Verbindungsleitung 19 zusammen mit dem über das Ansaugrohr 20 aus dem Reaktor abgeflossenen Gas-Wasser-Biomasse-Gemischs mittels der Pumpe 14 über die Zweistoffdüse 6 in den Reaktor zurückgeführt wird. Das dem Reaktor zufließende Abwasser kann vor dem Eintritt in den Reaktor mit gereinigtem Wasser vermischt werden. Das zulaufende Abwasser kann auch auf der Saugseite der Pumpe (14) mit dem in Kreis geführten und über die Leitung (20) abgesaugten Volumenstrom vermischt werden.

Als Gas können atmosphärische Luft, mit Sauerstoff angereicherte Luft oder reiner Sauerstoff verwendet werden. Mit Hilfe des erfindungsgemäßen Verfahrens können - 11 - insbesondere Abwässer, Schadstoffe enthaltendes Grundwasser und Industrieabwasser gereinigt werden.

**Patentansprüche**

1. Reaktor zum biologischen Reinigen von schadstoffhaltigem Wasser mittels Schlaufenbetriebs in einem geschlossenen Gefäß (1), in welchem

    a) vertikal und konzentrisch zu seinem Mantel und zueinander
       - ein Einsteckrohr (7), in das zwecks Zuleitung des zu reinigenden Biomasse-Wasser-Gas-Gemischs eine Düse (6) vom oberen Ende her hineinragt, und
       - ein Leitrohr (11), das mit dem innenliegenden Einsteckrohr (7) einen inneren Ringraum (27) und mit dem Reaktormantel einen äußeren Ringraum (23) bildet,
    b) mindestens ein konisch ausgebildeter Sedimentationsraum (15) sowie ein Absaugrohr (20) im unteren Teil angeordnet ist,
    c) das Einsteck- (7) und Leitrohr (11) beiderseits offen sind,
    d) das Leitrohr (11) oben und unten über die Enden des Einsteckrohrs (7) hinausragt, und
    e) eine Prallplatte (10) zur Umlenkung des aus dem unteren Ende strömenden Biomasse-Wasser-Gas-Gemischs unterhalb des Einsteckrohrs (7) und oberhalb des Absaugrohrs (20), aber innerhalb des Leitrohrs (11) so angeordnet ist, daß ein Teil des Biomasse-Wasser-Gas-Gemischs durch den inneren Ringraum nach oben strömt, während ein anderer Teil entweder über das Absaugrohr (20) nach unten abfließt oder in den äußeren Ringraum (23) gelangt.

2. Reaktor gemäß Anspruch 1, **dadurch gekennzeichnet,** daß der Sedimentationsraum mit Räumeinrichtungen zur Entfernung der Biomasse ausgestattet ist.

3. Reaktor gemäß Anspruch 1 oder 2, **dadurch gekennzeichnet,** daß als Räumeinrichtung bevorzugt Saugräumer verwendet werden.

4. Reaktor gemäß einem der Ansprüche 1 bis 3, **dadurch gekennzeichnet,** daß als Düse eine Zweistoffdüse (6) verwendet wird.

5. Reaktor gemäß einem der Ansprüche 1 bis 4, **dadurch gekennzeichnet,** daß der äußere und/oder innere Ringraum mit Einbauten (24) zwecks Immobilisierung von Mikroorganismen versehen sind.

6. Reaktor gemäß einem der Ansprüche 1 bis 5, **dadurch gekennzeichnet,** daß der äußere und/oder innere Ringraum Füllkörper als Trägermaterial für die Mikroorganismen enthalten.

7. Verfahren zur biologischen Reinigung von schadstoffhaltigem Wasser in einem Reaktor gemäß einem der Ansprüche 1 bis 6, **dadurch gekennzeichnet,** daß

    a) in das Einsteckrohr (7) mittels der Düse (6) ein Biomasse-Wasser-Gas-Gemisch eingetragen und
    b) an der Prallplatte (10) zum inneren Ringraum (22) umgelenkt, so daß ein Teil des Gemischs nach oben strömt, während der andere Teil über ein Absaugrohr (20) nach unten abfließt oder in den äußeren Ringraum (23) gelangt, wobei die Biomasse sich in den Sedimentationsraum (15) absetzt,
    c) das am oberen Ende des inneren Ringraums (22) austretende Gemisch durch die Triebstrahlwirkung der Düse (6) mit dem frisch zufließenden Wasser-Gas-Biomasse-Gemisch vermischt und in das Einsteckrohr eingetragen,
    d) das im äußeren Ringraum (23) aufwärts strömende Wasser einer Nachreaktion unterworfen und
    e) aus dem Reaktor über das Abflußrohr (2) als gereinigtes Wasser abgeführt wird.

8. Verfahren nach Anspruch 7, **dadurch gekennzeichnet,** daß das über das Absaugrohr (20) abfließende Wasser-Gas-Biomasse-Gemisch über die Zweistoffdüse (6) mittels einer Pumpe (14) in den Reaktor zurückgeführt wird.

**9.** Verfahren nach einem der Ansprüche 7 oder 8, **dadurch gekennzeichnet,** daß die Nachbehandlung im äußeren Ringraum (23) mittels trägergebundener Mikroorganismen durchgeführt wird.

**10.** Verfahren nach Anspruch 9, **dadurch gekennzeichnet,** daß als Träger feste Einbauten oder Füllkörper dienen.

**11.** Verfahren nach einem der Ansprüche 7 bis 10, **dadurch gekennzeichnet,** daß die im Sedimentationsraum (15) sich absetzende Biomasse mittels einer Pumpe (17) über ein Entnahmerohr (16) entnommen wird.

**12.** Verfahren nach Anspruch 11, **dadurch gekennzeichnet,** daß die Biomasse über eine gesonderte Leitung (18) mittels einer Pumpe (17) in den Reaktor zurückgeführt wird.

**13.** Verfahren nach einem der Ansprüche 11 oder 12, **dadurch gekennzeichnet,** daß die Biomasse über eine Verbindungsleitung (19) zusammen mit dem über das Absaugrohr (20) aus dem Reaktor abgeflossenen Gas-Wasser-Biomasse-Gemisch mittels einer Pumpe (14) der Zweistoffdüse (6) zugeführt wird.

**14.** Verfahren nach einem der Ansprüche 7 bis 13, **dadurch gekennzeichnet,** daß das dem Reaktor zulaufende Abwasser vor dem Eintritt in den Reaktor mit gereinigtem Wasser vermischt wird.

**15.** Verfahren nach Anspruch 14, **dadurch gekennzeichnet,** daß das zulaufende Abwasser auf der Saugseite der Pumpe (14) mit dem im Kreis geführten und über die Leitung (20) abgesaugten Volumenstrom vermischt wird.

**16.** Verfahren nach einem der Ansprüche 7 bis 15, **dadurch gekennzeichnet,** daß im äußeren Ringraum (23) eine Nitrifizierung stattfindet.

## Claims

**1.** Reactor for biologically cleaning water containing harmful substances by conducting the water through loops in a closed vessel (1) wherein

(a) there are arranged vertically and coaxially to the shell of the reactor and to each other

- an inserted pipe (7) into which a nozzle (6) is projecting from the upper end for the purpose of feeding the mixture of biological matter, water and gas to be cleaned;
- a guiding pipe (11) forming together with the inserted internal pipe (7) an inner annular space (27) and together with the shell of the reactor an outer annular space (23);

(b) at least one cone shaped sedimentation space (15) as well as a suction pipe (20) are arranged in the bottom part;

(c) the inserted pipe (7) and guiding pipe (11) are open on both sides;

(d) the guiding pipe (11) is projecting beyond the top and bottom ends of the inserted pipe (7); and

(e) a baffle plate (10) for deflecting said mixture of biological matter, water and gas flowing from the bottom end is arranged below said inserted pipe (7) and above said suction pipe (20), but within said guiding pipe (11) so that a part of said mixture of biological matter, water and gas flows upwards through said inner annular space, while another part thereof either flows downwards via said suction pipe (20) or flows into the outer annular space (23).

**2.** Reactor according to claim 1, characterized by that said sedimentation space is provided with raking means for removing the biological matter.

**3.** Reactor according to claim 1 or claim 2, characterized by that suction rakers are preferably used as said raking means.

**4.** Reactor according to any of the claims 1 to 3, characterized by that a binary nozzle (6) is used as said nozzle.

**5.** Reactor according to any of the claims 1 to 4, characterized by that said outer and/or inner annular spaces is/are provided with baffles (24) for immobilizing microorganisms.

**6.** Reactor according to any of the claims 1 to 5, characterized by that the outer and/or inner annular spaces contain a packing as support for said microorganisms.

**7.** Process for biologically cleaning water containing harmful substances in a reactor according to any of the claims 1 to 6, characterized by that

(a) a mixture of biological matter, water and gas is fed into said inserted pipe (7) by means of a nozzle (6) and
(b) is deflected at said baffle plate (10) to the inner annular space (22) so that a part of said mixture flows upwards, while the other part thereof either flows downwards via said suction pipe (20) or flows into the outer annular space (23) whereby said biological matter settles in the sedimentation space (15),
(c) the mixture emerging from the upper end of the inner annular space (22) is mixed by means of the jet effect of the nozzle (6) with the mixture of biological matter, water and gas freshly added and is fed into the inserted pipe,
(d) the water flowing upwards in said outer annular space (23) is subjected to an after-reaction and
(e) is removed from the reactor as cleaned water via the discharge pipe (2).

8. Process according to claim 7, characterized by that said mixture of biological matter, water and gas flowing via said suction pipe (20) is recycled into the reactor via the binary nozzle (6) by means of a pump (14).

9. Process according to any of the claims 7 or 8, characterized by that the after-treatment in said outer annular space (23) is carried out using microorganisms bound to a support.

10. Process according to claim 9, characterized by that fixed baffles or filling bodies are used as said support.

11. Process according to any of the claims 7 to 10, characterized by that the biological matter settling in the sedimentation space (15) is removed via a bleed pipe (16) by means of a pump (17).

12. Process according to claim 11, characterized by that said biological matter is recycled to the reactor via a separate pipe (18) by means of a pump (17).

13. Process according to any of the claims 11 or 12, characterized by that said biological matter, together with the mixture of biological matter, water and gas removed from the reactor through the suction pipe (20), is fed to said binary nozzle (6) via a junction pipe (19) by means of a pump (14).

14. Process according to any of the claims 7 to 13, characterized by that the waste water fed to the reactor is mixed with cleaned water before being fed to the reactor.

15. Process according to claim 14, characterized by that the fed waste water is mixed, on the inlet side of the pump (14), with the volume stream recycled and sucked off via the suction pipe (20).

16. Process according to any of the claims 7 to 15, characterized by that a nitrification is carried out in the outer annular space (23).

**Revendications**

1. Réacteur pour l'épuration biologique d'eau contenant des substances nocives, au moyen d'un fonctionnement en boucle dans un récipient fermé (1), dans lequel :
   a) sont disposés, verticalement et concentriquement par rapport à son enveloppe et les uns par rapport aux autres ,
      - un tube de piquage (7), dans lequel une buse (6) pénètre par l'extrémité supérieure, en vue d'assurer l'amenée du mélange biomasse-eau-gaz à épurer, et
      - un tube de guidage (11), qui forme avec le tube de piquage (7) placé à l'intérieur un espace annulaire intérieur (27) et, avec l'enveloppe de réacteur, un espace annulaire extérieur (23),
   b) au moins une enceinte de sédimentation (15) conique ainsi qu'un tube d'aspiration (20), est prévue dans la partie inférieure,
   c) le tube de piquage (7) et le tube de guidage (11) sont ouverts des deux côtés,
   d) le tube de guidage (11) dépasse, au-dessus et au-dessous, les extrémités du tube de piquage (7), et
   e) une plaque d'impact (10), servant à dévier le mélange biomasse-eau-gaz qui s'écoule par l'extrémité inférieure, est disposée au-dessous du tube de piquage (7) et au-dessus du tube d'aspiration (20), mais à l'intérieur du tube de guidage (11), de telle façon qu'une partie du mélange biomasse-eau-gaz s'écoule vers le haut, par l'espace annulaire intérieur, tandis qu'une autre partie soit s'écoule vers le bas, par le tube d'aspiration (20), soit arrive dans l'espace annulaire extérieur (23).

2. Réacteur selon la revendication 1, caractérisé en ce que l'enceinte de sédimentation est équipée de dispositif d'extraction pour éliminer la biomasse.

3. Réacteur selon la revendication 1 ou 2, caractérisé en ce que l'on utilise de préférence comme dispositif d'extraction des extracteurs à succion.

4. Réacteur selon l'une des revendications 1 à 3, caractérisé en ce que l'on utilise pour buse une buse bicomposants (6).

5. Réacteur selon l'une des revendications 1 à 4, caractérisé en ce que l'espace annulaire extérieur et/ou intérieur est/sont pourvu(s) d'habillages intérieurs (24) pour l'immobilisation des microorganismes.

6. Réacteur selon l'une des revendications 1 à 5, caractérisé en ce que l'espace annulaire extérieur et/ou intérieur est/sont pourvu(s) de corps de remplissage, servant de matériau support pour les microorganismes.

7. Procédé pour l'épuration biologique d'eau contenant des substances nocives, dans un réacteur selon l'une des revendications 1 à 6, caractérisé en ce que :
   a) un mélange biomasse-eau-gaz est introduit dans le tube de piquage (7), au moyen de la buse (6), et
   b) est dévié sur la plaque d'impact (10), vers l'espace annulaire intérieur (22), de sorte qu'une partie du mélange s'écoule vers le haut, tandis que l'autre partie s'écoule vers le bas, par un tube d'aspiration (20), ou arrive dans l'espace annulaire extérieure (23), la biomasse se déposant dans l'enceinte de sédimentation (15),
   c) le mélange, qui sort à l'autre extrémité de l'espace annulaire intérieur (22), est mélangé, par l'effet de jet moteur de la buse (6), au mélange eau-gaz-biomasse neuf qui arrive et introduit dans le tube de piquage,
   d) l'eau qui s'écoule vers le haut dans l'espace annulaire extérieur (23) est soumise à une réaction subséquente, et
   e) est évacuée du réacteur, à titre d'eau épurée, par le tube d'évacuation (2).

8. Procédé selon la revendication 7, caractérisé en ce que le mélange eau-gaz-biomasse qui s'écoule par le tube d'aspiration (20) est retourné dans le réacteur par la buse bi-composants (6), au moyen d'une pompe (14).

9. Procédé selon l'une des revendications 7 ou 8, caractérisé en ce que le retraitement est effectué dans l'espace annulaire extérieur (23), au moyen des microorganismes liés au support.

10. Procédé selon la revendication 9, caractérisé en ce que les habillages intérieurs ou les corps de remplissage servent de support.

11. Procédé selon l'une des revendications 7 à 10, caractérisé en ce que la biomasse qui se dépose dans l'enceinte de sédimentation (15) est prélevée au moyen d'une pompe (17), par un tube de prélèvement (16).

12. Procédé selon la revendication 11, caractérisé en ce que la biomasse est amenée dans le réacteur par une conduite séparée (18), au moyen d'une pompe (17).

13. Procédé selon l'une des revendications 11 ou 12, caractérisé en ce que la biomasse est amenée à la buse bicomposants (6) par une conduite de liaison (19), conjointement avec le mélange gaz-eau-biomasse qui s'écoule hors du réacteur par la conduite d'aspiration (20), au moyen d'une pompe (14).

14. Procédé selon l'une des revendications 7 à 13, caractérisé en ce que l'eau usée qui est amenée au réacteur est mélangée à de l'eau épurée, avant d'entrée dans le réacteur.

15. Procédé selon la revendication 14, caractérisé en ce que l'eau usée qui est amenée est mélangée, du côté aspiration de la pompe (14), au débit volume ayant passé dans le circuit et ayant été aspiré par la conduite (20).

16. Procédé selon l'une des revendications 7 à 15, caractérisé en ce qu'une nitrification a lieu dans l'espace annulaire extérieur (23).